# EUROPÄISCHE PATENTSCHRIFT

(11) **EP 2 545 004 B1**
(45) Veröffentlichungstag und Bekanntmachung des Hinweises auf die Patenterteilung: **26.11.2014**
(21) Anmeldenummer: 11714636.5
(22) Anmeldetag: 09.03.2011
(51) Int. Cl.: C02F 1/50, B63J 4/00

(54) **ROHRLEITUNGSSYSTEM SOWIE BALLASTWASSER-BEHANDLUNGSANLAGE UNTER VERWENDUNG DESSELBEN**
PIPELINE SYSTEM AND BALLAST WATER TREATMENT SYSTEM USING SAME
SYSTÈME DE TUYAUTERIE ET INSTALLATION DE TRAITEMENT DES EAUX DE BALLAST UTILISANT CE SYSTÈME DE TUYAUTERIE

(30) Priorität: 09.03.2010 DE 202010000339 U
(43) Veröffentlichungstag der Anmeldung: 16.01.2013
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB
(86) Internationale Anmeldenummer: PCT/EP2011/053511
(87) Internationale Veröffentlichungsnummer: WO 2011/110578

(56) Entgegenhaltungen:
- DE-A1- 4 326 575
- DE-U1-202007 004 912
- DE-U1-202009 007 693
- US-A1- 2005 016 933
- US-A1- 2008 164 217

## Beschreibung

Die Erfindung betrifft ein Rohrleitungssystem zum Fortleiten einer Biozidlösung von einer Reaktorvorrichtung zur Erzeugung von Biozidlösung zu einer Behandlungsvorrichtung zum Einführen der Biozidlösung in einen Ballastwasserstrom in einer Ballastwasserleitung mit einem Förderleitungssystem zwischen der Reaktorvorrichtung und der Behandlungsvorrichtung einer Ballastwasser-Behandlungsanlage.

Es ist bereits bekannt, dass Ballastwasser auf Schiffen durch den Einsatz von Bioziden desinfiziert werden kann. Besonders geeignet als Biozid ist Acrolein. Schon eine Zugabe von 5 bis 15 ppm Acrolein zum Ballastwasser können Bakterien, Algen, Zebra-Muscheln und anderen Organismen des Zooplanktons abgetötet werden, und damit kann der Transfer von einem Hafen zum anderen sicher unterbunden werden. Wässrige Lösungen von Acrolein sind nicht giftig und lassen sich sicher handhaben, jedoch beträgt die Haltbarkeit dieser Lösungen nur wenige Tage, so dass der Einsatz auf Schiffen wegen der logistischen Probleme unmöglich ist.

Aus DE-GM 20 2007 004 912 ist eine Vorrichtung bekannt, bei der das Ballastwasser mittels einer Druckerhöhungspumpe durch eine Wasserstrahlpumpe gepumpt wird und die Unterdruckzone der Wasserstrahlpumpe hydraulisch über ein Stellventil verbunden ist mit einem Reaktionsgefäß, welches außen angebrachte separate Zulauföffnungen für Acroleinacetal, Säure und Hydrolysewasser aufweist. In dem Reaktionsgefäß wird eine wässrige Acroleinlösung erzeugt, die nicht giftig ist und sich sicher handhaben lässt. Die Acroleinlösung wird in der Wasserstrahlpumpe dem Ballastwasser zugemischt, sodass die Organismen in dem Ballastwasser durch das Acrolein abgetötet werden. Diese Vorrichtung umfasst eine Rohrleitung zum Fortleiten der Acroleinlösung von dem Reaktionsgefäß zur Erzeugung der Acroleinlösung zu der Vorrichtung zum Einführen der Acroleinlösung in den Ballastwasserstrom auf. Bei derartigen Ballastwasser-Behandlungssystemen ist die Reaktorvorrichtung bevorzugt an Deck, beispielsweise in der Nähe der Brücke, angeordnet, während die Vorrichtung zum Einführen der Biozidlösung in den Ballastwasserstrom, d. h. die eigentliche Ballastwasser-Behandlungsvorrichtung, sich im Rumpf des Schiffes an der Ballastwasserleitung befindet. Daher muss dafür Sorge getragen werden, dass die Reaktorvorrichtung und die Behandlungsvorrichtung durch ein Rohrleitungssystem verbunden werden, dass auf der Distanz zwischen der Reaktorvorrichtung und der Ballastwasser-Behandlungsvorrichtung sicher ist und auch mit geringem Aufwand gewartet werden kann.

Es ist daher Aufgabe der Erfindung, ein derartiges Rohrleitungssystem sowie eine Ballastwasserbehandlungsanlage unter Verwendung eines solchen Rohrleitungssystems bereitzustellen, welche(s) den vorstehend genannten Erfordernissen gerecht wird.

Zur Lösung der Aufgabe ist das erfindungsgemäße Rohrleitungssystem gekennzeichnet durch ein Druckwasser-Leitungssystem, das eine Druckwasserquelle mit dem Förderleitungssystem an dessen Anschluss an der Reaktorvorrichtung verbindet, und durch ein Spülwasser-Leitungssystem, das mit dem Förderleitungssystem an dessen Anschluss an der Behandlungsvorrichtung verbunden ist. Durch diese Ausgestaltung des Rohrleitungssystems kann das Förderleitungssystem der Ballastwasserbehandlungsanlage nach Abschluss einer Ballastwasseraufnahme mit entsprechender Behandlung des Ballastwassers auf einfache Weise gespült werden, indem Druckwasser durch den entsprechenden Abschnitt des Druckwasserleitungssystems in das Förderleitungssystem und von dort über das Spülleitungssystem geleitet wird.

Zur Lösung der Aufgabe ist das erfindungsgemäße Rohrleitungssystem der eingangs genannten Art alternativ zu der vorstehenden Lösung des Rohrleitungssystems oder zusätzlich zu dem vorstehenden Rohrleitungssystem gekennzeichnet durch ein Druckwasser-Leitungssystem, das mit dem Förderleitungssystem an dessen Anschluss an der Behandlungsvorrichtung verbunden ist, und durch ein Spülwasser-Leitungssystem, das mit dem Förderleitungssystem an dessen Anschluss an der Reaktorvorrichtung verbunden ist. Wenn dieses Rohrleitungssystem alternativ zu dem vorstehenden Rohrleitungssystem verwendet wird, kann das Förderleitungssystem entgegen der Betriebs-Strömungsrichtung der Biozidlösung bei der vorhergehenden Ballastwasserbehandlung mit Druckwasser durchspült werden, indem das Druckwasser über das Druckwasserleitungssystem zu dem bei der Behandlungsvorrichtung liegenden Ende des Förderleitungssystems, von dort entgegen der normalen Förderrichtung der Biozidlösung durch das Förderleitungssystem strömt und von dort über das Spülleitungssystem abgeführt wird. Wenn das vorliegende Rohrleitungssystem zusätzlich zu dem vorstehend charakterisierten Rohrleitungssystem vorgesehen ist, kann das Förderleitungssystem sowohl in normaler Förderrichtung der Biozidlösung als auch entgegen der normalen Förderrichtung der Biozidlösung mit Druckwasser durchgespült werden, so dass in vorteilhafter Weise alle Bauteile in diesen Leitungen, wie Rohrkupplungen, Ventile oder dergleichen, in dem Förderleitungssystem in beiden Richtungen durchspült werden, so dass keine Rückstände an diesen Bauteilen verbleiben können.

Nach einer vorteilhaften Ausgestaltung der Erfindung ist das Rohrleitungssystem gekennzeichnet durch ein erstes Rohrkreuz mit Absperrventilen bei der Reaktorvorrichtung, das das Förderleitungssystem und/oder das Druckwasser-Leitungssystem und/oder das Spülwassersystem miteinander verbindet, und ein zweites Rohrkreuz mit Absperrventilen bei der Behandlungsvorrichtung, das ebenfalls das Förderleitungssystem und/oder das Druckwasser-Leitungssystem und/oder das Spülwassersystem miteinander verbindet. Durch diese Rohrkreuze mit Absperrventilen können die verschiedenen Strömungswege für das Druckwasser, die Biozidlösung und das.Spülwasser auf einfache Weise gesteuert werden, insbesondere dann, wenn die Absperrventile als von einem Steuerpult aus zu betätigende, beispielsweise elektromagnetische, Ventile sind.

Nach einer weiteren vorteilhaften Ausgestaltung der Erfindung ist das Rohrleitungssystem gekennzeichnet durch ein Absperrventil in einer Leitung zwischen dem zweiten Rohrkreuz und der Behandlungsvorrichtung. Durch dieses Ventil kann die Behandlungsvorrichtung in vorteilhafter Weise von dem Rohrsystem und dem Rest der Ballastwasserbehandlungsanlage getrennt werden, so dass Wartungs- und Säuberungsarbeiten durchgeführt werden können, ohne in das Ballastwasserrohrsystem einzugreifen.

Nach einer weiteren vorteilhaften Ausgestaltung der Erfindung ist das Rohrleitungssystem gekennzeichnet durch ein Absperrventil in einem Leitungsabschnitt des Spülwassersystems zwischen dem ersten Rohrkreuz und einer Neutralisierungsvorrichtung. Durch dieses Absperrventil im Zusammenwirken mit der Umschaltung der vorstehend erwähnten Absperrventile kann im Bedarfsfall, wenn der Förderleitungsabschnitt des Förderleitungssystems blockiert sein sollte, die Biozidlösung über das Spülleitungssystem zu der Ballastwasser-Behandlungsvorrichtung umgeleitet werden, wobei sich eine zusätzliche Redundanz in vorteilhafter Weise für die Leitungsführung der Biozidlösung ergibt.

Schließlich ist bei einem derartigen Leitungssystem noch vorteilhaft, dass, falls das Förderleitungssystem für die Biozidlösung blockiert sein sollte, das Druckwasser-Leitungssystem alternativ zur Beförderung der Biozidlösung von dem Reaktor zu der Ballastwasser-Behandlungsvorrichtung verwendet werden kann, was einen ersten Schritt zu einer vorteilhaften Redundanz des Leitungssystems darstellt.

Nach einer weiteren vorteilhaften Ausgestaltung der Erfindung ist das Rohrleitungssystem dadurch gekennzeichnet dass die Neutralisierungsvorrichtung einen mit einem Neutralisierungsmittel, vorzugsweise Aktivkohle oder Kalk, befüllten Behälter umfasst, was eine einfache und wirksame Methode ist, um auch eine geringe Geruchbelastung durch das Biozid zu reduzieren.

Nach einer weiteren vorteilhaften Ausgestaltung der Erfindung ist das Rohrleitungssystem gekennzeichnet durch ein Absperrventil in einem Leitungsabschnitt des Druckwassersystems zwischen dem ersten Rohrkreuz und der Druckwasserquelle, wodurch eine Sicherheitsmaßnahme gegen ein unbeabsichtigtes Durchschlagen von Druckwasser in das Rohrsystem geliefert wird.

Nach einer weiteren vorteilhaften Ausgestaltung der Erfindung ist das Rohrleitungssystem gekennzeichnet durch ein in Strömungsrichtung nach dem Absperrventil angeordnetes Rückschlagventil in dem Leitungsabschnitt des Druckwassersystems zwischen dem ersten Rohrkreuz und der Druckwasserquelle, wodurch verhindert wird, dass Lösung aus dem Reaktor in den Druckwassertank gelangen kann.

Nach einer weiteren vorteilhaften Ausgestaltung der Erfindung ist das Rohrleitungssystem dadurch gekennzeichnet, dass das Förderleitungssystem und/oder das Druckwasser-Leitungssystem und/oder das Spülwassersystem zwischen den Rohrkreuzen zu einer Mehrkanal-Rohrleitung zusammengefasst sind, wodurch ein zweckmäßiges und gut zugängliches Verlegen des Rohrleitungssystems ermöglicht wird.

Nach einer weiteren vorteilhaften Ausgestaltung der Erfindung ist das Rohrleitungssystem dadurch gekennzeichnet dass die Mehrkanal-Rohrleitung in einem Schutzrohr angeordnet ist, wobei das Rohrleitungssystem gegen äußere Einflüsse und die gegebenenfalls raue Umgebung auf einem Schiff geschützt wird, insbesondere dann, wenn das Schutzrohr eine Armierung vorzugsweise eine Stahlarmierung aufweist.

Nach einer weiteren vorteilhaften Ausgestaltung der Erfindung ist das Rohrleitungssystem dadurch gekennzeichnet dass die Mehrkanal-Rohrleitung flexible Leitungen umfasst. Dadurch wird eine bedarfsgerechte Verlegung des Leitungssystems in der Schiffsumgebung in vorteilhafter Weise ermöglicht.

Nach einer weiteren vorteilhaften Ausgestaltung der Erfindung ist das Rohrleitungssystem gekennzeichnet durch Segmentierung der Mehrkanal-Rohrleitung durch wenigstens ein Rohrkreuz mit Absperrventilen. Insbesondere dann, wenn das Leitungssystem zwischen der Reaktorvorrichtung und der Behandlungsvorrichtung eine gewisse Länge übersteigt, ist es vorteilhaft, das Rohrleitungssystem zu segmentieren. Daraus ergibt sich der weitere Vorteil, dass Wartungs- und Reparaturarbeiten an einzelnen Leitungssträngen eines Segments möglich sind, ohne die Funktionsfähigkeit des gesamten Systems zu gefährden.

Zur Lösung der Aufgabe ist schließlich eine Ballastwasser-Behandlungsanlage vorgesehen, die eine Reaktorvorrichtung zur Erzeugung Biozidlösung, eine Behandlungsvorrichtung zum Einführen der Biozidlösung in einen Ballastwasserstrom in einer Ballastwasserleitung, einen Druckwassertank zur Belieferung der Anlage mit Druckwasser und eine Neutralisierungsvorrichtung zur Neutralisierung von bei einer Reinigung der Anlage anfallender Biozidlösung und ein Rohrleitungssystem der vorstehend genannten Art nach einem der vorhergehenden Ansprüche. Die Vorteile einer derartigen Ballastwasser-Behandlungsanlage zeigen sich insbesondere dann, wenn das Befördern der Biozidlösung von dem Reaktor zu der Behandlungsvorrichtung über Unterdruck bzw. eine Venturi-Düse, erfolgt, weil dann ohne einen Druckwassertank eine wirtschaftliche Reinigung des Rohrsystems schwierig würde.

Ausführungsbeispiele der Erfindung werden nun anhand der beilliegenden Zeichnungen beschrieben. Es zeigen:
- Fig. 1: ein Schemadiagramm einer Ballastwasser-Behandlungsanlage mit einem Ausführungsbeispiel des erfindungsgemäßen Rohrleitungssystems; und
- Fig. 2: eine abgewandelte Ausführungsform des Rohrleitungssystems mit Rohrleitungssegmenten.

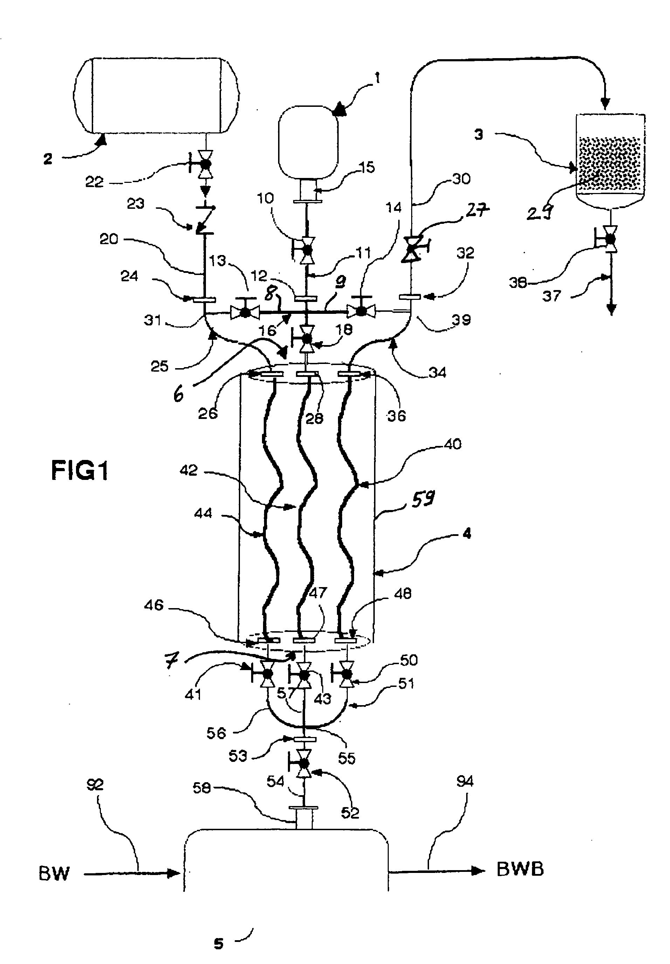

In Fig. 1 ist eine Ballastwasser-Behandlungsanlage gezeigt, die eine Reaktorvorrichtung 1 zur Erzeugung Biozidlösung, eine Behandlungsvorrichtung 5 zum Einführen der Biozidlösung in einen Ballastwasserstrom in einer Ballastwasserleitung 92, 94, einen Druckwassertank 2 zur Belieferung der Anlage mit Druckwasser und eine Neutralisierungsvorrichtung 3, die einen mit einem Neutralisierungsmittel, beispielsweise Aktivkohle oder Kalk, befüllten Behälter 29 umfasst, zur Neutralisierung von bei einer Reinigung der Anlage anfallenden Biozidlösung aufweist. Diese Komponenten der Ballastwasser-Behandlungsanlage sind durch ein Rohrleitungssystem miteinander verbunden, das eine Mehrkanal-Rohrleitung 4 mit einem Eintrittsende 6 und einem Austrittsende 7 und zu- und abschaltbare Rohrleitungen zu den Komponenten der Ballastwasser-Behandlungsanlage umfasst.

Ein mit einem Absperrventil 10 versehener Förderleitungsabschnitt 11 als Rohrleitung führt von einem Austrittsflansch 15 der Reaktorvorrichtung 1 zu einer Rohrkupplung 12, die mit einem Arm eines ersten vierarmigen Rohrkreuzes 16 verbunden ist. Die drei anderen Arme des Rohrkreuzes 16sind über Absperrventile 13, 14 und 18 mit T-Stücken 31, 39 und einer Rohrkupplung 28 verbunden. Ein Arm der Rohrkreuzes 16 mit dem Absperrventil bildet einen Druckwasserleitungsabschnitt 8, und ein anderer Arm mit dem Absperrventil 14 bildet einen Spülleitungsabschnitt 9. Somit wird das Förderleitungssystem durch den Förderleitungsabschnitt 11, den Förderleitungsabschnitt 42 und den Förderleitungsabschnitt 54 gebildet. Das Rohrkreuz 16 liegt an einem Eintrittsende 6 einer Mehrkanal-Rohrleitung 4, die den Förderleitungsabschnitt 42, den Druckwasserleitungsabschnitt 44 und den Spülleitungsabschnitt 40 umfasst.

Mit der Rohrkupplung 28 ist ein Förderleitungsabschnitt 42 für die Biozidlösung verbunden, der über eine Rohrkupplung 47 mit einem geraden Arm 57 eines zweiten Rohrkreuzes 55 verbunden ist. Der gerade Arm 57 des Rohrkreuzes 55 enthält ein Absperrventil 43. Die beiden andere Arme des Rohrkreuzes 55 sind als Rohrbogen 51 und 56 ausgebildet und enthalten Absperrventile 41 und 50. Ein Arm des Rohrkreuzes 55 ist über eine Rohrkupplung 53 mit einem Rohrstutzen 54 verbunden, welcher als kurzes Stück Rohrleitung ausgebildet ist und ein Absperrventil 52 enthält. Der Rohrstutzen 54 ist seinerseits mit einem Zuflussflansch 58 der Behandlungsvorrichtung 5 verbunden. Die Behandlungsvorrichtung 5 weist außer dem Zuflussflansch 58 mindestens eine Zuflussleitung 92 für Ballastwasser BW sowie eine Abflussleitung 94 für mit Biozidlösung behandeltes Ballastwasser BWB auf.

Der Druckwassertank 2 ist durch einen Druckwasserleitungsabschnitt 20, der ein Absperrventil 22 und ein Rückschlagventil 23 enthält, über eine Rohrkupplung 24 mit einem T-Stück 31 verbunden. Das T-Stück 31 ist einerseits über ein Absperrventil 13 mit dem Förderleitungsabschnitt 11 zwischen der Rohrkupplung 12 und dem Ventil 18 und andererseits über eine Rohrkupplung 26 mit einem Druckwasserleitungsabschnitt 44 verbunden. Der Druckwasserleitungsabschnitt 44 ist über die Rohrkupplung 46 mit einem Arm 56 des Rohrkreuzes 51 und ein Absperrventil 43 in einem anderen Arm 57 des Rohrkreuzes 51 über eine Rohrkupplung 47 an dem Förderleitungsabschnitt 42 an einem Austrittsende 7 der Mehrkanal-Rohrleitung 4 angeschlossen. Der Druckwasserleitungsabschnitt 44 ist ferner über einen weiteren Arm 51 des Rohrkreuzes 51 und ein Absperrventil 50 in einem anderen Arm 57 des Rohrkreuzes 51 über eine Rohrkupplung 48 an dem Spülleitungsabschnitt 40 angeschlossen. Das Druckwasser-Leitungssystem wird somit durch den DruckDruckwasserleitungsabschnitt 20, die Druckwasserleitung 44 und den Druckwasserleitungsabschnitt 8 gebildet.

Der Spülleitungsabschnitt 40 ist über ein weiteres T-Stück 39 und eine Rohrkupplung 32 an einen Spülleitungsabschnitt 30 angeschlossen, der zu der Neutralisierungsvorrichtung 3 führt. In einer Ablaufleitung 37 der Neutralisierungsvorrichtung 3 ist ebenfalls ein Absperrventil 38 vorgesehen. D16: Der Spülleitungsabschnitt 9 führt über das T-Stück 39 zu einer Rohrkupplung 32, die über ein Absperrventil 27 in einem Spülleitungsabschnitt 30 mit der Neutralisierungsvorrichtung 3 verbunden ist. Das Spülleitungssystem wird somit durch den Spülleitungsabschnitt 9, den Spülleitungsabschnitt 30 und den Spülleitungsabschnitt 40 gebildet.

Der Förderleitungsabschnitt 42, der Druckwasserleitungsabschnitt 44 und der Spülleitungsabschnitt 40 sind in einem Schutzrohr 59 angeordnet, das die drei Leitungen umschließt und gegen äußere Einflüsse schützt. Vorzugsweise ist das Schutzrohr 59 an beiden Enden offen. Das Schutzrohr kann eine geschlossen Oberflache haben oder eine Lochung aufweisen oder eine durchbrochene gitterartige Oberflächenstruktur haben. Auch eine Armierung, vorzugsweise eine Stahlarmierung ist vorteilhaft. Der Durchmesser des Schutzrohres ist so groß, das einzelne darin befindliche Leitungen leicht herausgezogen werden können. In einer anderen Ausführung wird das Schutzrohr in Form von zwei auseinander zu nehmenden Halbschalen gebildet.

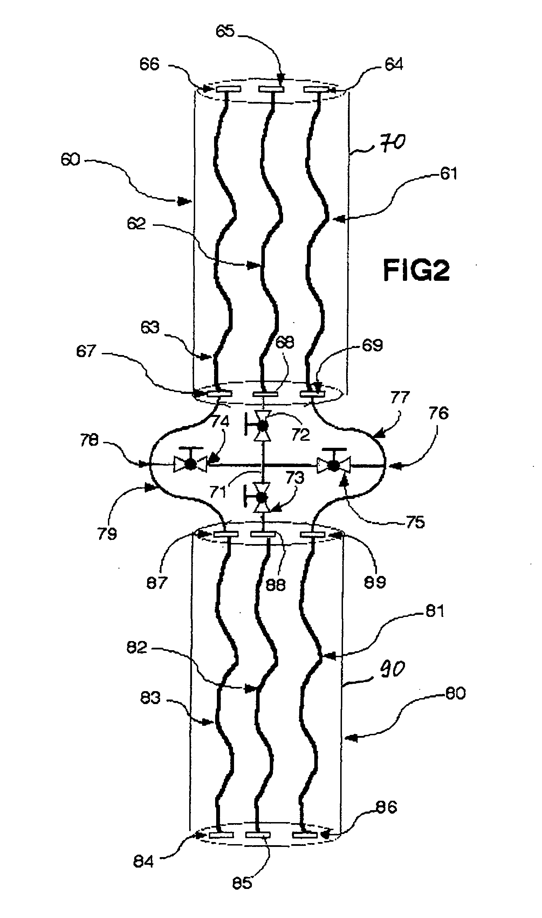

In Fig. 2 ist eine abgewandelte Ausführung des Rohrsystems gezeigt. Sofern örtliche Gegebenheiten es nicht gestatten, die Mehrkanal-Rohrleitung in einem Stück auszuführen, wird die Mehrkanal-Rohrleitung in segmentierter Form ausgebildet. Dementsprechend sind in Fig. 2 ein erster Rohrleitungsabschitt 60 mit einem darin befindlichen Förderleitungsabschnitt 62, einem Druckwasserleitungsabschnitt 63 und einem Spülleitungsabschnitt 61 sowie ein weiterer Rohrleitungsabschitt 80 mit einem darin befindliche Förderleitungsabschnitt 82, einem Druckwasserleitungsabschnitt 83 und einem Spülleitungsabschnitt 81 gezeigt. Die Leitungen in dem ersten Rohrleitungsabschitt 60 sind in einem Schutzrohr 70 enthalten, und die Leitungen in dem zweiten Rohrleitungsabschitt 80 sind in einem Schutzrohr 90 enthalten.

Die beiden Rohrleitungsabschnitte 60, 80 sind über ein Rohrkreuz 71 und T-Stücke 76, 78 miteinander verbunden. Rohrkupplungen 66, 65, und 64 sowie 67, 68, 69 sind mit den jeweiligen Leitungen verbunden, wie in Fig. 2 dargestellt ist. Das Rohrkreuz 71 und die T-Stücke 76, 78 bilden den Abschluss des oberen Rohrleitungsabschnittes 60. Weitere Rohrkupplungen 87, 88, 89 sind mit den jeweiligen Leitungen verbunden, wie in Fig. 2 dargestellt ist, verbunden und stellen die Verbindung mit dem unteren Rohrleitungsabschnitte 80 her. Weitere Rohrkupplungen 86, 85, und 84 an unteren Ende des Rohrleitungsabschnitts 80 dienen zum Anschluss eines weitern Rohrleitungsabschnitts oder zu der Behandlungsvorrichtung.

Zwei gegenüber liegende Arme des Rohrkreuzes 71 sind über die Absperrventile 72 und 73 mit den Rohrkupplungen 68 und 88 verbunden und stellen die Verbindung der Förderleitungsabschnitte 62, 82 des ersten und des zweiten Rohrsegments 60 bzw. 80 dar. Die zwei anderen gegenüber liegenden Arme des Rohrkreuzes 71 sind über die Absperrventile 74 und 75 mit den T-Stücken 76 und 78 verbunden. Das T-Stück 78 ist mittig im Doppel-S-Rohrbogen 79 angeordnet. Der Doppel-S-Rohrbogen 79 kuppelt über die Rohrkupplungen 67 und 87 die Druckwasserleitungsabschnitte 63 bzw. 83 des oberen und unteren Rohrsegmentes. Das T-Stück 76 ist mittig im Doppel-S-Rohrbogen 77 angeordnet. Der Doppel-S-Rohrbogen 77 kuppelt über die Rohrkupplungen 69 und 89 die Spülleitungsabschnitte 61 bzw. 81 des oberen und unteren Rohrsegmentes.

Im Folgenden werden die verschiedenen Betriebsweisen der Anlage beschrieben.

### A) FÖRDERBETRIEB

Die in der Reaktorvorrichtung 1 erzeugte Biozidlösung fließt bei geöffnetem Absperrventil 10 durch den Austrittsflansch 15 in den Förderleitungsabschnitt 11. Im Förderbetrieb sind die Absperrventile 13 und 14 geschlossen und das Absperrventil 18 ist geöffnet. Infolgedessen fließt die Biozidlösung in den Förderleitungsabschnitt 42 und tritt aus dem Förderleitungsabschnitt 42 über die Rohrkupplung 47 in einen geraden Arm 57 des Rohrkreuzes 55.

Der gerade Arm 57 des Rohrkreuzes 55 enthält das Absperrventil 43, welches beim Förderbetrieb geöffnet ist. Während des Förderbetriebes sind die Absperrventile 41 und 50 geschlossen. Infolgedessen fließt die Biozidlösung durch den vierten Arm des Rohrkreuzes 55 über die Rohrkupplung 53 in den Rohrstutzen 54. Im Förderbetrieb ist das Absperrventil 52 geöffnet und infolgedessen fließt die Biozidlösung in den Zuflussflansch 58 der Behandlungsvorrichtung 5.

### B) NACHSPÜLUNG

Nach Beendigung des Förderbetriebes wird das Absperrventil 10 geschlossen. Das Absperrventil 13 im Rohrkreuz 16 wird geöffnet, wodurch der Zugang zum T-Stück 31 frei wird. Wasser aus dem Druckwassertank 2 fließt bei geöffneten Absperrventil 22 über das Rückschlagventil 23 in die Druckwasserleitungsabschnitt 20, welcher mittels einer Rohrkupplung 24 mit dem T-Stück 31 verbunden ist. Vorzugsweise ist das Ventil 22 stets geöffnet, so dass die Leitung 20 stets mit Wasser unter Druck gefüllt ist.

Durch Schließen des Absperrventils 10 und Öffnen des Absperrventils 13 fließt Wasser durch das geöffnete Absperrventil 18 in den Förderleitungsabschnitt 42 und durch die geöffneten Absperrventile 43 und 54 in den Zuflussflansch 58 der Behandlungsvorrichtung 5. Alle Leitungen und Armaturen der erfindungsgemäßen Vorrichtung ab dem Absperrventil 10 werden infolgedessen von Biozidlösung gesäubert und mit Wasser aus dem Druckwassertank 2 gefüllt.

### C) UNTERBRECHUNGSBETRIEB (GEGEN+GLEICHSTROMSPÜLUNG)

Weil Biozidlösung, insbesondere Acrolienlösung, zeitlich nur begrenzt haltbar ist, müssen für den Fall der Betriebsunterbrechung oder für den Fall, dass an der erfindungsgemäßen Vorrichtung Reparaturarbeiten vorgenommen werden, müssen der Förderleitungsabschnitt 42 und die Rohrkreuze 16 und 55 vollständig gesäubert werden

Falls auf Grund einer Betriebsstörung die Förderung von Biozidlösung in den Zuflussflansch 58 der Vorrichtung 5 unterbrochen werden muss, geschieht dies durch Schließen des Absperrventils 10 und des Absperrventils 52.

Sodann wird Absperrventil 41 und Absperrventil 14 geöffnet. Die Absperrventile 13 und 50 bleiben geschlossen; die Absperrventile 18 und 43 bleiben geöffnet. Infolgedessen fließt Druckwasser von dem T-Stück 31 durch den S-Rohrbogen 25 über die Rohrkupplung 26 in den Druckwasserleitungsabschnitt 44 und tritt über die Rohrkupplung 46 und durch das Absperrventil 41 in den einen Rohrbogen 56 des Rohrkreuzes 55 ein. Weil das Absperrventil 50 geschlossen und Absperrventil 43 geöffnet ist, gelangt das Druckwasser über die Rohrkupplung 47 entgegen der Förderrichtung in die Förderleitung 42 und verdrängt die darin befindliche Biozidlösung durch das geöffnete Ventil 14 über die Rohrkupplung 32 in den Spülleitungsabschnitt 30.

Daran folgend werden die Absperrventile 41 und 14 geschlossen. Die Absperrventile 13 und 50 werden geöffnet. Infolgedessen fließt das Druckwasser im Gleichstrom mit der ursprünglichen Förderrichtung durch das geöffnete Absperrventil 18 über die Rohrkupplung 28 in den Förderleitungsabschnitt 42 ein und fließt über das Rohrkreuz 55 und den Rohrbogen 51 und die Rohrkupplung 48 in den Spülleitungsabschnitt 40.

Da der Spülleitungsabschnitt 40 mittels der Rohrkupplung 36 mit dem S-Rohrbogen 34 verbunden ist, welcher zugleich mit einem Schenkel des T-Stückes 38 verbunden ist, fließt das Spülwasser durch die Rohrkupplung 32 in den Spülleitungsabschnitt 30.

Nach Beendigung des Neutralisationsvorganges kann das neutralisierte Wasser von Zeit zu Zeit über das geöffnete Absperrventil 38 in die Abwasserleitung 37 abgelassen werden.

### D) BETRIEB BEI SEGMENTIERTER ROHRLEITUNG

Im Normalfall sind die Absperrventile 74 und 75 geschlossen und die Absperrventile 72 und 73 geöffnet so dass das Rohrkreuz 71 die oberen drei Leitungsstränge mit den unteren drei Leitungssträngen jeweils gleichartig verbindet.

Infolge der Ausgestaltung des Rohrkreuzes mit den vier Absperrventilen 72,73, 74 und 75 und deren Verbindung mit den Doppel-S-Rohrbogen 77 und 79 kann jedoch der Förderleitungsabschnitt für Biozidlösung in jedem Rohrsegment wie oben beschrieben im Gleich- und im Gegenstrom, einzeln oder als Segmentgruppe gereinigt und gespült werden.

Durch die Segmentierung des Rohrleitungssystems kann falls erforderlich auch der störungsfreie Ausbau einzelner Leitungen vorgenommen werden, ohne dass ein gefährlicher Betriebszustand entsteht.

## Patentansprüche

1. Rohrleitungssystem zum Fortleiten einer Biozidlösung von einer Reaktorvorrichtung (1) zur Erzeugung von Biozidlösung zu einer Behandlungsvorrichtung (5) zum Einführen der Biozidlösung in einen Ballastwasserstrom in einer Ballastwasserleitung (92, 94) mit einem Förderleitungssystem (11, 42, 54) zwischen der Reaktorvorrichtung (1) und der Behandlungsvorrichtung (5) einer Ballastwasser-Behandlungsanlage, **gekennzeichnet durch** ein Druckwasser-Leitungssystem (8, 44), das eine Druckwasserquelle (2) mit dem Förderleitungssystem (11, 42, 54) an dessen Anschluss an der Reaktorvorrichtung (1) verbindet, und **durch** ein Spülwasser-Leitungssystem (9, 30, 40), das mit dem Förderleitungssystem (11, 42, 54) an dessen Anschluss an der Behandlungsvorrichtung (5) verbunden ist.

2. Rohrleitungssystem zum Fortleiten einer Biozidlösung von einer Reaktorvorrichtung (1) zur Erzeugung Biozidlösung zu einer Behandlungsvorrichtung (5) zum Einführen der Biozidlösung in einen Ballastwasserstrom in einer Ballastwasserleitung (92, 94) mit einem Förderleitungssystem (11, 42, 54) zwischen der Reaktorvorrichtung (1) und der Behandlungsvorrichtung (5), insbesondere nach Anspruch 1, **gekennzeichnet durch** ein Druckwasser-Leitungssystem (8, 20, 44), das mit dem Förderleitungssystem (11, 42, 54) an dessen Anschluss an der Behandlungsvorrichtung (5) verbunden ist,
und **durch** ein Spülwasser-Leitungssystem (9, 30, 40), das mit dem Förderleitungssystem (11, 42, 54) an dessen Anschluss an der Reaktorvorrichtung (1) verbunden ist.

3. Rohrleitungssystem nach Anspruch 1 oder 2, **gekennzeichnet durch** ein erstes Rohrkreuz (16) mit Absperrventilen (13, 14, 18) bei der Reaktorvorrichtung, das das Förderleitungssystem (11, 42, 54) und/oder das Druckwasser-Leitungssystem (8, 20, 44) und/oder das Spülwasser-Leitungssystem (9, 30, 40) miteinander verbindet, und ein zweites Rohrkreuz (55) mit Absperrventilen (41, 43, 50) bei der Behandlungsvorrichtung, das ebenfalls das Förderleitungssystem (11, 42, 54) undloder das Druckwasser-Leitungssystem (8, 20, 44) und/oder das Spülwasser-Leitungssystem (9, 30, 40) miteinander verbindet.

4. Rohrleitungssystem nach Anspruch 1 oder 2, **gekennzeichnet durch** ein Absperrventil (52) in einer Leitung zwischen dem zweiten Rohrkreuz (55) und der Behandlungsvorrichtung (5).

5. Rohrleitungssystem nach Anspruch 1 oder 2, **gekennzeichnet durch** ein Absperrventil (27) in einem Spülleitungsabschnitt (30) des Spülwasser-Leitungssystems (9, 30, 40) zwischen dem ersten Rohrkreuz und einer Neutralisierungsvorrichtung (3).

6. Rohrleitungssystem nach Anspruch 5, **dadurch gekennzeichnet dass** die Neutralisierungsvorrichtung (3) einen mit einem Neutralisierungsmittel, vorzugsweise Aktivkohle oder Kalk, befüllten Behälter (29) umfasst.

7. Rohrleitungssystem nach Anspruch 1 oder 2, **gekennzeichnet durch** ein Absperrventil (22) in einem Leitungsabschnitt (20) des Druckwasser-Leitungssystems (8, 20, 44) zwischen dem ersten Rohrkreuz (16) und der Druckwasserquelle (2).

8. Rohrleitungssystem nach Anspruch 1 oder 2, **gekennzeichnet durch** ein in Strömungsrichtung nach dem Absperrventil (22) angeordnetes Rückschlagventil (23) in dem Leitungsabschnitt (20) des Druckwasser-Leitungssystems (8, 20, 44) zwischen dem ersten Rohrkreuz (16) und der Druckwasserquelle (2).

9. Rohrleitungssystem nach Anspruch 3, **dadurch gekennzeichnet, dass** der Förderleitungsabschnitt (42) des Förderleitungssystems und/oder der Druckwasserleitungsabschnitt (44) des Druckwasser-Leitungssystems und/oder der Spülleitungsabschnitt (40) des Spülwassersystems zwischen den Rohrkreuzen zu einer Mehrkanal-Rohrleitung (4) zusammengefasst sind.

10. Rohrleitungssystem nach Anspruch 4, **dadurch gekennzeichnet dass** die Mehrkanal-Rohrleitung (4) in einem Schutzrohr angeordnet ist.

11. Rohrleitungssystem nach Anspruch 5, **dadurch gekennzeichnet dass** das Schutzrohr (59) eine Armierung, vorzugsweise eine Stahlarmierung, aufweist.

12. Rohrleitungssystem nach einem der Ansprüche 4 bis 6, **dadurch gekennzeichnet dass** die Mehrkanal-Rohrleitung (4) flexible Leitungen umfasst.

13. Rohrleitungssystem nach einem der Ansprüche 4 bis 7, **gekennzeichnet durch** Segmentierung der Mehrkanal-Rohrleitung **durch** wenigstens ein Rohrkreuz (71) mit Absperrventilen (72, 73, 74, 75).

14. Ballastwasser-Behandlungsanlage umfassend eine Reaktorvorrichtung (1) zur Erzeugung Biozidlösung, eine Behandlungsvorrichtung (5) zum Einführen der Biozidlösung in einen Ballastwasserstrom in einer Ballastwasserleitung (92, 94), einen Druckwassertank (2) zur Belieferung der Anlage mit Druckwasser und eine Neutralisierungsvorrichtung (3) zur Neutralisierung von bei einer Reinigung der Anlage anfallender Biozidlösung, **gekennzeichnet durch** ein Rohrleitungssystem nach einem der vorhergehenden Ansprüche.

## Claims

1. Pipeline system for transporting a biocide solution from a reactor device (1) for generating biocide solution to a treatment device (5) for introducing the biocide solution into a ballast water flow in a ballast water line (92, 94) having a transport line system (11, 42, 54) between the reactor device (1) and the treatment device (5) of the ballast water treatment system **characterized by** a pressurized water line system (8, 44) connecting a pressurized water source (2) to the transport line system (11, 42, 54) at the connection thereof to the reactor device (1), and by a flush water line system (9, 30, 40) connected to the transport line system (11, 42, 54) at the connection thereof to the treatment device (5).

2. Pipeline system for transporting a biocide solution from a reactor device (1) for generating biocide solution to a treatment device (5) for introducing the biocide solution into a ballast water flow in a ballast water line (92, 94) having a transport line system (11, 42, 54) between the reactor device (1) and the treatment device (5) of the ballast water treatment system, in particular according to claim 1, **characterized by** a pressurized water line system (8, 20, 44) connected to the transport line system (11, 42, 54) at the connection thereof to the treatment device (5), and by a flush water line system (9, 30, 40) connected to the transport line system (11, 42, 54) at the connection thereof to the reactor device (1).

3. Pipeline system according to claim 1 or 2, **characterized by** a first pipe crosspiece (16) having shut-off valves (13, 14, 18) at the reactor device which crosspiece connects the transport line system (11, 42, 54) and/or the pressurized water line system (8, 20, 44) and/or the flush water line system (9, 30, 40) with each other, and by a second pipe crosspiece (55) having shut-off valves (41, 43, 50) at the treatment device which also connects the transport line system (11, 42, 54) and/or the pressurized water line system (8, 20, 44) and/or the flush water line system (9, 30, 40) with each other.

4. Pipeline system according to claim 1 or 2, **characterized by** a shut-off valve (52) in a pipeline between the second pipe crosspiece (55) and the treatment device (5).

5. Pipeline system according to claim 1 or 2, **characterized by** a shut-off valve (27) in a pipeline portion (30) of the flush water pipe system (9, 30, 40) between the first pipe crosspiece and a neutralizing device (3).

6. Pipeline system according to claim 5, **characterized in that** the neutralizing device (3) comprises a container (29) filled with a neutralizing agent, preferably activated carbon or chalk.

7. Pipeline system according to claim 1 or 2, **characterized by** a shut-off valve (22) in a pipeline portion (20) of the pressurized water system (8, 20, 44) between the first pipe crosspiece (16) and the pressurized water source (2).

8. Pipeline system according to claim 1 or 2, **characterized by** a check valve (23) arranged in flow direction after the shut-off valve (22) in the pipeline portion (20) of the pressurized water pipe system (8, 20, 44) between the first pipe crosspiece (16) and the pressurized water source (2).

9. Pipeline system according to claim 3, **characterized in that** the transport line portion (42) of the transport line system and/or the pressurized water line portion (44) of the pressurized water line system and/or flush line portion (40) of the flush water line system are combined to a multi-channel pipeline (4).

10. Pipeline system according to claim 4, **characterized in that** the multi-channel pipe (4) is arranged in a protective pipe.

11. Pipeline system according to claim 5, **characterized in that** the protective pipe (59) comprises a pipe amour, preferably a steel amour.

12. Pipeline system according to claim 4 to 6, **characterized in that** the multi-channel pipe (4) comprises flexible pipes.

13. Pipeline system according to claim 4 to 7, **characterized by** segmenting the multi-channel pipe by means of at least one pipe crosspiece (71) with shut-off valves (72, 73, 74,75).

14. Ballast water treatment system comprising a reactor device (1) for generating biocide solution, a treatment device (5) for introducing the biocide solution into a ballast water flow in the ballast water line (92, 94), a pressurized water tank (2) for supplying pressurized water to the system and a neutralizing device (3) for neutralizing biocide solution produced during rinsing of the system, and a pipeline system of the above-mentioned kind according to one of the proceeding claims.

## Revendications

1. Système de tuyauterie pour le transport d'une solution biocide à partir d'un système de réacteur (1) pour la production de la solution biocide vers un système de traitement (5) visant à introduire la solution biocide dans un courant d'eau de ballast circulant dans une conduite d'eau de ballast (92, 94) avec un système de tuyauterie de transport (11, 42, 54) entre le système de réacteur (1) et le système de traitement (5) d'une installation de traitement d'eau de ballast, **caractérisé par** un système de tuyauterie d'eau sous pression (8, 44) relié au système de tuyauterie de transport (11, 42, 54) par une source d'eau sous pression (2) via son raccordement au système de réacteur (1), et par un système de tuyauterie d'eau de rinçage (9, 30, 40) relié au système de tuyauterie de transport (11, 42, 54) via son raccordement au système de traitement (5).

2. Système de tuyauterie pour le transport d'une solution biocide à partir d'un système de réacteur (1) pour la production de la solution biocide vers un système de traitement (5) visant à introduire la solution biocide dans un courant d'eau de ballast circulant dans une conduite d'eau de ballast (92, 94) avec un système de tuyauterie de transport (11, 42, 54) entre le système de réacteur (1) et le système de traitement (5), notamment selon la revendication 1, **caractérisé par** un système de tuyauterie d'eau sous pression (8, 20, 44) relié au système de tuyauterie de transport (11, 42, 54) via son raccordement au système de traitement (5), et par un système de tuyauterie d'eau de rinçage (9, 30, 40) relié au système de tuyauterie de transport (11, 42, 54) via son raccordement au système de réacteur (1).

3. Système de tuyauterie selon la revendication 1 ou 2, **caractérisé par** un premier tuyau en croix (16) avec robinets d'arrêt (13, 14 18) sur le système de réacteur reliant entre eux le système de tuyauterie de transport (11, 42, 54) et/ou le système de tuyauterie d'eau sous pression (8, 20, 44) et/ou le système de tuyauterie d'eau de rinçage (9, 30, 40), et un second tuyau en croix (55) - avec robinets d'arrêt (41,43, 50) slirle Système de traitement reliant également entre eux le système de tuyauterie de transport (11, 42, 54) et/ou le système de tuyauterie d'eau sous pression (8, 20, 44) et/ou le système de tuyauterie d'eau de rinçage (9, 30, 40).

4. Système de tuyauterie selon les revendications 1 ou 2, **caractérisé par** un robinet d'arrêt (52) dans une conduite entre le second tuyau en croix (55) et le système de traitement (5).

5. Système de tuyauterie selon les revendications 1 ou 2, **caractérisé par** un robinet d'arrêt (27) dans une section de tuyauterie de rinçage (30) du système de tuyauterie d'eau de rinçage (9, 30, 40) entre le premier tuyau en croix et le dispositif de neutralisation (3).

6. Système de tuyauterie selon la revendication 5, **caractérisé en ce que** le dispositif de neutralisation (3) comprend un récipient (29) rempli d'un agent neutralisant, idéalement du charbon actif ou de la chaux.

7. Système de tuyauterie selon les revendications 1 ou 2, **caractérisé par** un robinet d'arrêt (22) dans une section de tuyauterie (20) du système de tuyauterie d'eau sous pression (8, 20, 44) entre le premier tuyau en croix (16) et la source d'eau sous pression (2).

8. Système de tuyauterie selon les revendications 1 ou 2, **caractérisé par** une valve anti-retour (23) disposé après le robinet d'arrêt (22) dans la direction de circulation dans la section de tuyauterie (20) du système de tuyauterie d'eau sous pression (8, 20, 44) entre le premier tuyau en croix (16) et la source d'eau sous pression (2).

9. Système de tuyauterie selon la revendication 3, **caractérisé en ce que** la section de tuyauterie de transport (42) du système de tuyauterie de transport et/ou de la section de tuyauterie d'eau sous pression (44) du système de tuyauterie d'eau sous pression et/ou de la section de tuyauterie de rinçage (40) du système de tuyauterie d'eau de rinçage entre les tuyaux en croix sont regroupés en une conduite à canaux multiples (4).

10. Système de tuyauterie selon la revendication 4, **caractérisé en ce que** la conduite à canaux multiples (4) est disposée dans un tuyau protecteur.

11. Système de tuyauterie selon la revendication 5, **caractérisé en ce que** le tuyau protecteur (59) comporte un gainage, idéalement un gainage d'acier

12. Système de tuyauterie selon l'une des revendications 4 à 6, **caractérisé en ce que** la conduite à canaux multiples (4) comprend des conduites flexibles.

13. Système de tuyauterie selon l'une des revendications 4 à 7, **caractérisé par** la segmentation de la conduite à canaux multiples par au moins un tuyau en croix (71) avec robinets d'arrêt (72, 73, 74,75).

14. Installation de traitement d'eau de ballast comprenant un système de réacteur (1) pour la production d'une solution biocide, un système de traitement (5) pour l'introduction de la solution biocide dans un courant d'eau de ballast d'une conduite d'eau de ballast (92, 94), un réservoir d'eau sous pression (2) pour alimenter l'installation en eau sous pression et un dispositif de neutralisation (3) pour la neutralisation d'une solution biocide produite lors du rinçage de l'installation, **caractérisée par** un système de tuyauterie selon l'une des revendications précédentes.
